# FASCICULE DE BREVET EUROPEEN

(11) **EP 1 391 385 B1**
(45) Date de publication et mention de la délivrance du brevet: **29.06.2005**
(21) Numéro de dépôt: 03102514.1
(22) Date de dépôt: 12.08.2003
(51) Int. Cl.: B64G 1/40, F17C 13/02, F17C 13/00, B23K 11/26, F02K 9/60

(54) **Ensemble cryogénique pour fusée ou lanceur tel qu'une structure de réservoir équipée d'au moins un dispositif de fixation d'équipements**
Kryogenische Einrichtung für Trägerrakete, insbesondere Tankstruktur, mit zumindest einer Halterungseinrichtung
Cryogenic assembly for rocket or launch vehicle such as a tank structure equipped with at least one equipment-holding device

(30) Priorité: 14.08.2002 FR 0210332
(43) Date de publication de la demande: 25.02.2004
(73) Titulaire: Cryospace l'Air Liquide Aerospatiale, 78130 Les Mureaux (FR)
(72) Inventeur: Cargnello, Rémo, 78130 Les Mureaux (FR); Fossen, Arnaud, 92100 Boulogne (FR)
(74) Mandataire: Poulin, Gérard

(56) Documents cités:
- FR-A- 2 368 154
- GB-A- 2 106 321
- GUILLARD P ET AL: "ARIANE-5: THE H155 CRYOGENIC MAIN STAGE" ESA BULLETIN, ESA SCIENTIFIC AND PUBLICATIONS BRANCH. NOORDWIJK, NL, no. 73, 1 février 1993 (1993-02-01), pages 42-53, XP000387408 ISSN: 0376-4265

## Description

### DOMAINE TECHNIQUE

La présente invention se rapporte à un ensemble cryogénique comportant une structure sur laquelle est assemblé au moins un dispositif de fixation d'un ou plusieurs équipements.

L'invention trouve une application toute particulière dans les domaines aéronautique et spatial, en tant que structure de réservoir cryogénique équipée de dispositifs de fixation d'équipements et montée sur une fusée ou un lanceur. Dans un tel cas, les dispositifs de fixation sont alors destinés à recevoir des équipements devant cheminer le long de la paroi extérieure ou de la paroi intérieure de la structure du réservoir cryogénique. A titre d'exemples, les équipements sont de forme sensiblement linéaire du type câbles électriques et/ou lignes pyrotechniques, ou encore des équipements structuraux classiques tels que des appareils de mesure.

L'invention concerne en outre un procédé de fabrication d'un tel ensemble cryogénique.

### ETAT DE LA TECHNIQUE ANTERIEURE

Dans ce domaine technique, plusieurs réalisations ont déjà été proposées dans l'art antérieur.

On connaît en effet un réservoir cryogénique classique pour lanceur comme celui décrit dans "Ariane - 5 : The H155 Cryogenic Main Stage", ESA Bulletin, no. 73, comprenant un dispositif de fixation de câbles électriques ou autres, monté rigidement sur la paroi extérieure ou intérieure de la structure de ce réservoir. Dans ce réservoir classique, le dispositif de fixation du type rampe et également appelé « gouttière électrique » est apte à recevoir fixement une pluralité de câbles et/ou des lignes pyrotechniques.

Cependant, les différentes techniques d'assemblage utilisées dans l'art antérieur pour monter le dispositif de fixation sur la structure du réservoir cryogénique engendrent toutes des inconvénients majeurs.

En effet, la structure du réservoir cryogénique disposant d'une épaisseur moyenne relativement faible, parfois de l'ordre de quelques millimètres seulement, il est par conséquent nécessaire de réaliser des bossages sur la surface extérieure ou intérieure du réservoir, afin d'être en mesure d'effectuer des trous filetés autorisant une fixation par vissage de la rampe sur la structure du réservoir.

Cette nécessité rencontrée provoque directement des difficultés de réalisation du réservoir, sa forme extérieure ayant été largement complexifiée en raison de l'adjonction des bossages. Par ailleurs, la présence des bossages engendre également une surélévation de la masse du réservoir cryogénique, l'augmentation observée ayant été évaluée à plusieurs dizaines de kilogrammes, et allant inévitablement à l'encontre d'un soucis majeur et constant de réduction de la masse totale du lanceur ou de la fusée.

Afin de faire face aux problèmes liés à l'adjonction de bossages sur la structure du réservoir, une autre solution a été proposée dans l'art antérieur. Cette solution d'assemblage consiste à coller la rampe directement sur la surface extérieure ou intérieure de la structure du réservoir, à l'aide d'une colle apte à résister aux basses températures.

Néanmoins, la mise en oeuvre de cette technique alternative est très difficile à maîtriser, en particulier dans le domaine cryogénique, et encore davantage lorsque le réservoir concerné est destiné à contenir de l'hydrogène liquide à une température avoisinant 20°K.

De plus, malgré l'absence de bossages sur la structure porteuse du réservoir, la technique employée n'est pas totalement satisfaisante, notamment en raison de l'impossibilité d'obtenir un maintien sûr de la rampe sur la structure, lorsque cette rampe doit résister à des efforts importants à basses températures.

En outre, lors de la mise en oeuvre d'une telle technique de collage, le cycle de production est largement alourdi par rapport à la technique de vissage classique présentée ci-dessus. En effet, des étapes intermédiaires telles que celles de préparation des surfaces, d'application de la colle et de polymérisation de la colle doivent être ajoutées, naturellement au détriment de la rapidité de la fabrication du réservoir cryogénique.

### EXPOSÉ DE L'INVENTION

L'invention a donc tout d'abord pour but de proposer un ensemble cryogénique comportant une structure sur laquelle est assemblé au moins un dispositif de fixation apte à recevoir au moins un équipement, ledit ensemble remédiant au moins partiellement aux inconvénients mentionnés ci-dessus relatifs aux réalisations de l'art antérieur.

Plus précisément, le but de l'invention est de présenter un ensemble cryogénique dont la conception est adaptée pour diminuer considérablement l'ajout de matière nécessaire au montage du/des dispositifs de fixation sur la structure, et réduisant de manière non négligeable le coût global industriel de la fabrication de cet ensemble cryogénique.

Par ailleurs, l'invention a également pour but de proposer un procédé de fabrication d'un ensemble cryogénique tel que celui répondant au but mentionné ci-dessus.

Pour ce faire, l'invention a pour objet un ensemble cryogénique comprenant une structure sur laquelle est monté au moins un dispositif de fixation apte à recevoir au moins un équipement. Selon l'invention, chaque dispositif de fixation est assemblé sur la structure par l'intermédiaire d'une soudure réalisée à l'aide de moyens de soudage par décharge de condensateur.

Avantageusement, la technique de soudage spécifique mise en oeuvre pour réaliser l'assemblage des différents éléments de l'ensemble est simple et rapide, et autorise la suppression des bossages présents dans les réalisations antérieures. Les avantages précités entraînent directement une réduction des coûts de fabrication de l'ensemble cryogénique, ainsi qu'une baisse conséquente de la masse totale de cet ensemble.

De plus, il a été observé qu'avec des paramètres d'utilisation réglés de manière appropriée, les moyens de soudage par décharge de condensateur permettaient d'obtenir des soudures n'affectant pas thermiquement et ne fragilisant pas mécaniquement la structure de l'ensemble cryogénique.

Ainsi, contrairement aux techniques de soudage classiques connues dans d'autres domaines que celui de l'invention, la réalisation de la soudure à l'aide de moyens de soudage par décharge de condensateur ne provoque ni une détérioration des tolérances géométriques de la structure, ni une modification notable de la microstructure de cette dernière.

Par conséquent, l'ensemble cryogénique selon l'invention est facilement capable de supporter des pressions et des températures cryogéniques, et permet de s'affranchir des risques de rupture de la liaison mécanique prévue entre la structure et un dispositif de fixation quelconque d'équipements. Notons que cette caractéristique avantageuse garantit le respect fonctionnel de la propulsion, lorsque la structure de l'ensemble cryogénique est une structure de réservoir équipant une fusée ou un lanceur.

Préférentiellement, chaque dispositif de fixation comporte un goujon dont l'une des extrémités est assemblée sur la structure par l'intermédiaire d'une soudure réalisée à l'aide de moyens de soudage par décharge de condensateur, ainsi que des moyens de réception d'au moins un équipement solidaires de l'autre des extrémités du goujon du dispositif. Dans un tel cas, on peut alors prévoir que les moyens de réception sont montés sur le goujon à l'aide d'un assemblage vis/écrou.

Par ailleurs, pour chaque dispositif de fixation, les moyens de réception comportent de façon avantageuse une surface de réception d'un équipement de forme sensiblement linéaire, cette surface de réception disposant d'une section prenant la forme de la petite base et des deux côtés latéraux d'un trapèze.

Notons qu'afin de maintenir fixement l'équipement de forme sensiblement linéaire contre la surface de réception, les moyens de réception sont préférentiellement munis d'un collier de serrage.

Selon un mode de réalisation préféré de la présente invention, la structure est une structure de réservoir cryogénique, chaque dispositif de fixation étant assemblé indifféremment sur une surface intérieure ou une surface extérieure de la structure du réservoir.

Pour une structure d'épaisseur moyenne d'environ 6 mm, un réglage optimal des paramètres de fonctionnement des moyens de soudage par décharge de condensateur permettent avantageusement d'obtenir une soudure n'excédant pas 0,4 mm d'épaisseur, limitant ainsi fortement la profondeur de pénétration de cette soudure dans la structure de l'ensemble cryogénique.

De façon préférée, le goujon de chaque dispositif de fixation et la structure sont réalisés en aluminium ou dans l'un de ses alliages.

Enfin, dans une application particulière de l'invention, les équipements à fixer sur chaque dispositif de fixation sont des équipements de forme sensiblement linéaire tels que des câbles, et l'ensemble cryogénique est destiné à équiper un lanceur ou une fusée.

En outre, l'invention a pour objet un procédé de fabrication d'un ensemble cryogénique tel que celui mentionné ci-dessus et également objet de l'invention, comprenant une étape de soudage par décharge de condensateur de chaque dispositif de fixation sur la structure de l'ensemble.

Selon un mode de réalisation préféré de ce procédé, l'étape de soudage par décharge de condensateur est réalisée en mode percussion sous protection gazeuse, à l'aide d'un générateur disposant de condensateurs dont la capacité totale est d'environ 96000 µF, et délivrant une tension électrique comprise entre 100 et 110 V.

Avantageusement, cette étape de soudage par décharge de condensateur est réalisée à l'aide d'un pistolet relié au générateur, le pistolet étant apte à éjecter des goujons avec une force de forgeage comprise entre 1,5 et 2 daN.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en coupe d'un ensemble cryogénique selon un mode de réalisation préféré de la présente invention, un dispositif de fixation appartenant à cet ensemble coopérant avec un équipement de forme sensiblement linéaire ; et
- la figure 2 représente une vue en perspective du dispositif de fixation de l'ensemble cryogénique représenté sur la figure 1, lorsque aucun équipement n'a encore été monté sur ce dispositif.

### EXPOSÉ DÉTAILLÉ D'UN MODE DE RÉALISATION PRÉFÉRÉ

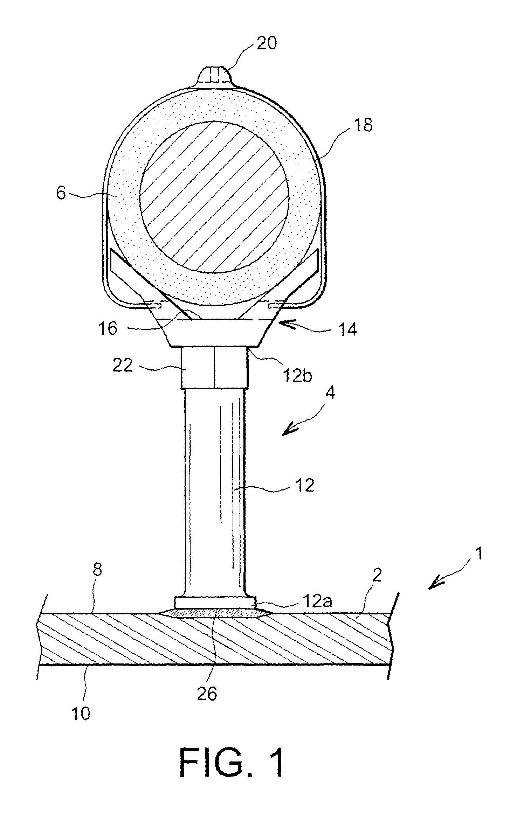

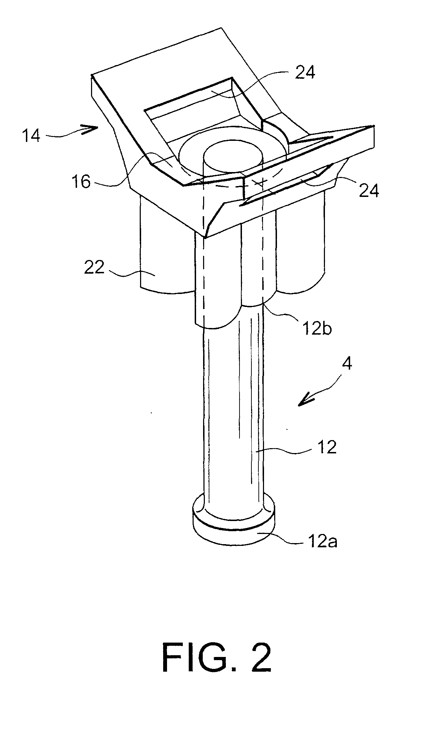

En référence aux figures 1 et 2, on peut voir une ensemble cryogénique 1, comprenant une structure 2 du type structure porteuse sur laquelle est monté au moins un dispositif de fixation 4 apte à recevoir au moins un équipement 6, selon un mode de réalisation préféré de la présente invention.

Dans la description réalisée ci-dessous, la structure 2 de l'ensemble 1 peut être considérée comme une structure de réservoir cryogénique équipant un engin ou un véhicule dans les domaines aéronautique et spatial, le dispositif de fixation 4 étant alors monté sur la surface intérieure 8 ou la surface extérieure 10 de cette structure. Bien entendu, l'application de l'ensemble 1 n'est en aucun cas limitée à son adjonction sur une fusée ou un lanceur en tant que structure de réservoir cryogénique munie de dispositifs de fixation d'équipements 6.

Par ailleurs, le ou les équipements 6 que doit maintenir le dispositif de fixation 4 sont généralement de forme sensiblement linéaire, et peuvent s'apparenter à des câbles ou à des tubes quelconques devant cheminer le long de la surface intérieure 8 ou extérieure 10 de la structure 2 du réservoir. Toujours à titre d'exemples non limitatifs, il peut s'agir de câbles électriques, de gaines pyrotechniques ou de ventilation, ou encore d'équipements quelconques tels que des appareils de mesure.

Sur la figure 1, seul un unique dispositif de fixation 4 a été représenté. Il est à noter que l'ensemble cryogénique 1 pourrait naturellement en comprendre plusieurs, par exemple alignés les uns avec les autres dans le but de recevoir un équipement 6 de forme sensiblement linéaire et cheminant le long de la structure 2. De la même manière, le dispositif de fixation 4 est représenté sur la figure 1 en recevant un seul équipement 6 de forme sensiblement linéaire, mais pourrait bien entendu en recevoir davantage.

Le dispositif de fixation 4 comprend un goujon 12 creux ou plein réalisé en aluminium ou dans l'un de ses alliages, de préférence en aluminium AG3, ce goujon 12 étant muni de deux extrémités 12a et 12b. La première extrémité 12a est destinée à être fixée sur la structure 2 de l'ensemble 1, tandis que la seconde extrémité 12b est apte à coopérer avec des moyens de réception d'un ou de plusieurs équipements 14. Préférentiellement, les moyens de réception 14 sont assemblés sur la seconde extrémité 12b du goujon 12 par vissage.

Dans le mode de réalisation préféré décrit, les moyens de réception 14 comportent une surface de réception 16 de l'équipement 6 de forme sensiblement linéaire. Comme cela est visible sur les figures 1 et 2, la surface de réception 16 dispose d'une section prenant la forme de la petite base et des deux côtés latéraux d'un trapèze, de sorte que deux ou trois de ces éléments soient en contact avec la surface extérieure d'un équipement 6 de forme sensiblement linéaire et de section sensiblement circulaire. Il est précisé que la forme de la surface de réception 16 peut bien entendu être adaptée en fonction de la géométrie de l'équipement 6 à maintenir, sans sortir du cadre de l'invention.

En référence à la figure 1, les moyens de réception 14 comportent en outre un collier de serrage 18, de préférence réalisé dans un matériau relativement souple de façon à ce qu'il épouse au maximum la surface extérieure de l'équipement 6, ce dernier étant maintenu fermement contre la surface de réception 16 lorsque la fermeture 20 de ce collier 18 est actionnée. A titre d'exemple, le collier 18 pourra être métallique ou réalisé en matière plastique.

Afin d'assurer le maintien du collier de serrage 18 sur une embase 22 des moyens de réception 14 portant la surface de réception 16, cette embase 22 comporte des orifices 24 à travers lesquels le collier 18 est susceptible de coulisser. Notons que cette embase 24 dispose d'une portion filetée (non représentée) apte à coopérer avec la seconde extrémité 12b du goujon 12.

Selon l'invention, la première extrémité 12a du goujon 12 est assemblée sur la structure 2 par l'intermédiaire d'une soudure 26 réalisée à l'aide de moyens de soudage par décharge de condensateur (non représentés), consistant à produire une décharge électrique par une batterie de capacités ou de condensateurs. Avantageusement, lors de la mise en oeuvre de ce type de moyens de soudage, l'interaction entre le goujon 12 et la structure 2 est très brève, parfois d'une durée de quelques millisecondes seulement, et garantit par conséquent une déformation minimale de la structure 2 ainsi qu'une très faible profondeur de pénétration de la soudure 26 dans celle-ci. Ainsi, après la réalisation de la soudure 26, la structure 2 dispose d'une zone affectée thermiquement d'épaisseur relativement faible par rapport à l'épaisseur totale de la structure 2, le rapport R entre ces épaisseurs étant de préférence de l'ordre de quinze. De plus, il est également possible d'effectuer la soudure 26 sur un trottoir de soudage de la structure 2, les trottoirs de soudage étant légèrement en surépaisseur par rapport à l'épaisseur moyenne de la structure 2, et permettant d'obtenir un rapport R encore plus important, de l'ordre de vingt.

Il a par ailleurs été constaté que lorsque la structure 2 est une structure de réservoir cryogénique, la soudure 26 obtenue de cette façon permet d'assurer la reprise des efforts dynamiques par exemple rencontrés en situation de vol lors du décollage ou des phases d'accélération, ainsi que la reprise des efforts hyperstatiques par exemple du type contractions thermiques rencontrées lors de la mise en froid de la structure du réservoir par les ergols.

A titre d'exemples, en réglant de façon optimale différents paramètres des moyens de soudage par décharge de condensateur exposés ci-après, il a été obtenu de façon répétée des soudures 26 n'excédant pas 0,4 mm d'épaisseur, sur des structures 2 d'épaisseur moyenne variant entre 4 et 8 mm. Notons que ces essais ont été effectués pour des goujons 12 en aluminium AG3 d'environ 6 mm de diamètre, sur des structures 2 composées d'un alliage d'aluminium 2219.

L'invention se rapporte également à un procédé de fabrication d'un tel ensemble cryogénique 1, comprenant une étape de soudage par décharge de condensateur de chaque dispositif de fixation 4 sur la structure 2 de cet ensemble 1.

Cette étape de soudage peut avantageusement être précédée d'une brève opération de préparation de la surface intérieure 8 ou extérieure 10 sur laquelle sont destinés à prendre place les dispositifs de fixation 4, et plus spécifiquement les premières extrémités 12a des goujons 12. Notons que cette opération classique de préparation de surface a pour principal but d'éliminer les corps gras présents sur la structure 2, ces corps étant fortement préjudiciables lors de la réalisation d'opérations de soudage. A cet égard, il est à noter que pour obtenir la surface la plus pure possible, la ou les opérations de dégraissage mises en oeuvre sont immédiatement suivies de la fixation des goujons 12 sur la structure 1.

La présence d'aluminium dans la structure 2 et les goujons 12 n'étant pas spécialement favorable aux opérations de soudage, la réalisation d'une soudure 26 entre deux éléments 2 et 12 doit donc être effectuée en réglant judicieusement les différents paramètres de fonctionnement des moyens de soudage par décharge de condensateur, dans le but d'obtenir des résultats aussi fiables que possibles.

Tout d'abord, l'étape de soudage s'effectue en mode percussion sous protection gazeuse. A ce titre, la protection gazeuse du soudage du goujons 12 sur la structure 2 est obtenue par balayage de gaz inerte, ce balayage ayant également pour fonction d'assainir l'environnement du soudage. L'assainissement ainsi effectué permet alors d'une part d'évacuer des particules susceptibles de s'interposer entre le goujon 12 et la structure 2 durant leur assemblage, et d'autre part de ventiler la zone de soudage pour assécher les contacts métalliques, avant la formation de l'arc électrique produit par les moyens de soudage.

A titre d'exemples, on peut utiliser un mélange gazeux comprenant 98% d'Argon et 2% de Dioxyde de carbone, ou encore un mélange comprenant 33% d'Argon et 67% d'Hélium, balayé à un débit compris entre 10 et 15 l/min.

Pour effectuer ces opérations de soudage, les moyens de soudage comprennent un générateur relié à deux points de masse sur la structure 2, afin d'autoriser le passage du courant dans le circuit de soudage. Ce générateur est préférentiellement équipé de condensateurs d'une capacité totale d'environ 96000 µF, d'une tension de charge pouvant varier entre 40 et 200 V, et d'une énergie maximum d'environ 2000 J. Dans ce générateur, le réglage du voltage s'effectue à l'aide d'un potentiomètre apte à faire varier le voltage de l'arc électrique jusqu'à 200 V. Cependant, des essais réalisés ont démontré qu'une tension comprise entre 100 et 110 V conduisait à l'obtention de soudures 26 tout à fait satisfaisantes.

Les moyens de soudage par décharge de condensateur comprennent également un pistolet utilisé en mode percussion et relié au générateur. A titre indicatif, le mode percussion diffère d'un mode contact classique dans le sens où le goujon 12 mis en tension et disposé à l'intérieur du pistolet n'entre en contact avec la structure 2 qu'au moment précis du déclenchement du cycle de soudage. De plus, l'entrée en contact d'un goujon 12 avec la structure 2 s'effectue à vitesse parfaitement contrôlée, avec une force de forgeage exercée par le pistolet comprise entre 1 et 8 daN. Lors du réglage des différents paramètres, il est également préférable de tenir compte de la levée de l'arc électrique, c'est-à-dire de la distance de compression du ressort de percussion du pistolet. Ainsi, cette distance de compression pourra par exemple être comprise être entre 3 et 4 mm, de sorte que la force de forgeage obtenue soit comprise entre 1,5 et 2 daN.

Il est cependant à noter que la distance de compression doit également être déterminée en fonction de la hauteur de dépassement de la première extrémité 12a d'un goujon 12 par rapport à la buse d'éjection du pistolet prenant appui sur la structure 2.

Lorsque les réglages indiqués ci-dessus ont été effectués, les goujons 12 peuvent être assemblés successivement sur la structure 2 de l'ensemble cryogénique 1. Ensuite, les moyens de réception 14 sont assemblés par vissage sur les secondes extrémités 12b des goujons 12, et les équipements 6 sont enfin mis en place sur ces moyens de réception 14, et maintenus fermement à l'aide des colliers de serrage 18. Il est par ailleurs précisé que lorsque les équipements 6 sont des éléments structuraux classiques de forme non nécessairement linéaire, par exemple des appareils de mesure, ces derniers peuvent alors être directement montés par vissage sur les goujons 12.

Bien entendu, diverses modifications peuvent être apportées par l'homme du métier à l'ensemble cryogénique 1 qui vient d'être décrit, uniquement à titre d'exemple non limitatif.

## Revendications

1. Ensemble cryogénique (1) comprenant une structure (2) sur laquelle est monté au moins un dispositif de fixation (4) apte à recevoir au moins un équipement (6), **caractérisé en ce que** chaque dispositif de fixation (4) est assemblé sur ladite structure (2) par l'intermédiaire d'une soudure (26) réalisée à l'aide de moyens de soudage par décharge de condensateur.

2. Ensemble cryogénique (1) selon la revendication 1, dans lequel chaque dispositif de fixation (4) comporte un goujon (12) dont l'une des extrémités (12a) est assemblée sur ladite structure (2) par l'intermédiaire d'une soudure (26) réalisée à l'aide de moyens de soudage par décharge de condensateur, ainsi que des moyens de réception (14) d'au moins un équipement (6) solidaires de l'autre des extrémités (12b) du goujon (12) dudit dispositif (4).

3. Ensemble cryogénique (1) selon la revendication 2, dans lequel pour chaque dispositif de fixation (4), les moyens de réception (14) sont montés sur ledit goujon (12) à l'aide d'un assemblage vis/écrou.

4. Ensemble cryogénique (1) selon la revendication 2 ou la revendication 3, dans lequel pour chaque dispositif de fixation (4), les moyens de réception (14) comportent une surface de réception (16) d'un équipement (6) de forme sensiblement linéaire, ladite surface de réception (16) disposant d'une section prenant la forme de la petite base et des deux côtés latéraux d'un trapèze.

5. Ensemble cryogénique (1) selon la revendication 4, dans lequel pour chaque dispositif de fixation (4), les moyens de réception (14) sont munis d'un collier de serrage (18) apte à maintenir fixement l'équipement (6) de forme sensiblement linéaire contre ladite surface de réception (16).

6. Ensemble cryogénique (1) selon l'une quelconque des revendications précédentes, dans lequel la structure (2) est une structure de réservoir cryogénique, chaque dispositif de fixation (4) étant assemblé indifféremment sur une surface intérieure (8) ou une surface extérieure (10) de la structure (2) du réservoir.

7. Ensemble cryogénique (1) selon l'une quelconque des revendications 2 à 6, dans lequel la structure (2) a une épaisseur moyenne d'environ 6 mm, et dans lequel chaque soudure (26) prévue entre un goujon (12) et la structure (2) a une épaisseur d'environ 0,4 mm.

8. Ensemble cryogénique (1) selon l'une quelconque des revendications 2 à 7, dans lequel le diamètre de chaque goujon (12) est d'environ 6 mm.

9. Ensemble cryogénique (1) selon l'une quelconque des revendications 2 à 8, dans lequel le goujon (12) de chaque dispositif de fixation (4) et la structure (2) sont réalisés en aluminium ou dans l'un de ses alliages.

10. Ensemble cryogénique (1) selon l'une quelconque des revendications précédentes, dans lequel chaque équipement (6) à fixer sur chaque dispositif de fixation (4) est un équipement (6) de forme sensiblement linéaire tel qu'un câble, ledit ensemble cryogénique (1) étant destiné à équiper un lanceur ou une fusée.

11. Procédé de fabrication d'un ensemble cryogénique (1) selon l'une quelconque des revendications précédentes, **caractérisé en ce qu'**il comprend une étape de soudage par décharge de condensateur de chaque dispositif de fixation (4) sur la structure (2) de l'ensemble (1).

12. Procédé selon la revendication 11, dans lequel l'étape de soudage par décharge de condensateur est réalisée en mode percussion sous protection gazeuse.

13. Procédé selon la revendication 11 ou la revendication 12, dans lequel l'étape de soudage par décharge de condensateur est réalisée à l'aide d'un générateur disposant de condensateurs dont la capacité totale est d'environ 96000 µF.

14. Procédé selon l'une quelconque des revendications 11 à 13, dans lequel l'étape de soudage par décharge de condensateur est réalisée à l'aide d'un générateur délivrant une tension électrique comprise entre 100 et 110 V.

15. Procédé selon la revendication 13 ou la revendication 14, dans lequel l'étape de soudage par décharge de condensateur est réalisée à l'aide d'un pistolet relié audit générateur, le pistolet étant apte à éjecter des goujons (12) avec une force de forgeage comprise entre 1,5 et 2 daN.

## Patentansprüche

1. Kryogenische Einrichtung (1) mit einer Struktur (2), auf der wenigstens eine Haltevorrichtung (4) angebracht ist, die wenigstens eine Einrichtung (6) aufzunehmen im Stande ist,
**dadurch gekennzeichnet, dass** jede Haltevorrichtung (4) auf der Struktur (2) mittels einer Schweißnaht (26) befestigt ist, die mit Hilfe von Mitteln zum Kondensatorentladungsschweißen ausgeführt ist.

2. Kryogenische Einrichtung (1) nach Anspruch 1,
bei der jede Haltevorrichtung (4) einen Bolzen (12) aufweist, der mit einem seiner Enden (12a) auf der Struktur (2) mittels einer Schweißnaht (26) befestigt ist, die mit Hilfe von Mitteln zum Kondensatorentladungsschweißen ausgeführt ist, sowie Mittel (14) zum Aufnehmen wenigstens einer Einrichtung (6), die mit dem anderen Ende (12b) des Bolzens (12) der Vorrichtung (4) fest verbunden sind.

3. Kryogenische Einrichtung (1) nach Anspruch 2,
bei der für jede Haltevorrichtung (4) die Aufnahmemittel (14) mit Hilfe einer SchraubenMutter-Verbindung auf dem Bolzen (12) angebracht sind.

4. Kryogenische Einrichtung (1) nach Anspruch 2 oder Anspruch 3,
bei der für jede Haltevorrichtung (4) die Aufnahmemittel (14) eine Fläche (16) zur Aufnahme einer im Wesentlichen geradlinigen Einrichtung (6) aufweisen, wobei die Aufnahmefläche (16) über einen Querschnitt verfügt, der die Form der kleinen Grundlinie und der beiden Seiten eines Trapezes hat.

5. Kryogenische Einrichtung (1) nach einem Anspruch 4,
bei der für jede Haltevorrichtung (4) die Aufnahmemittel (14) mit einer Schelle (18) versehen sind, die die im Wesentlichen geradlinige Einrichtung (6) fest gegen die Aufnahmefläche (16) zu halten im Stande ist.

6. Kryogenische Einrichtung (1) nach einem der vorhergehenden Ansprüche,
bei der die Struktur (2) eine Kryobehälter-Struktur ist, wobei jede Haltevorrichtung (4) unterschiedslos auf einer Innenseite (8) oder einer Außenseite (10) der Struktur (2) des Behälters befestigt ist.

7. Kryogenische Einrichtung (1) nach einem der Ansprüche 2 bis 6,
bei der die Struktur (2) eine mittlere Dicke von etwa 6 mm hat, und bei der jede zwischen einem Bolzen (12) und der Struktur (2) vorgesehene Schweißnaht (26) eine Dicke von etwa 0,4 mm hat.

8. Kryogenische Einrichtung (1) nach einem der Ansprüche 2 bis 7,
bei der der Durchmesser jedes Bolzens (12) etwa 6 mm ist.

9. Kryogenische Einrichtung (1) nach einem der Ansprüche 2 bis 8,
bei der der Bolzen (12) jeder Haltevorrichtung (4) und die Struktur (2) aus Aluminium oder einer seiner Legierungen ausgeführt sind.

10. Kryogenische Einrichtung (1) nach einem der vorhergehenden Ansprüche,
bei der jede auf jeder Haltevorrichtung (4) zu befestigende Einrichtung (6) eine im Wesentlichen geradlinige Einrichtung (6) wie ein Kabel ist, wobei die kryogene Einheit (1) dazu bestimmt ist, eine Trägerrakete oder eine Rakete auszurüsten.

11. Verfahren zur Herstellung einer kryogenischen Einrichtung (1) nach einem der vorhergehenden Ansprüche,
**dadurch gekennzeichnet, dass** es einen Schritt des Kondensatorentladungsschweißens jeder Haltevorrichtung (4) auf der Struktur (2) der Einheit (1) umfasst.

12. Verfahren nach Anspruch 11,
bei dem der Schritt des Kondensatorentladungsschweißens durch Bolzenschweißen unter Gasschutz ausgeführt wird.

13. Verfahren nach Anspruch 11 oder 12,
bei dem der Schritt des Kondensatorentladungsschweißens mit Hilfe eines Generators ausgeführt wird, der über Kondensatoren verfügt, deren Gesamtkapazität etwa 96000 µF beträgt.

14. Verfahren nach einem der Ansprüche 11 bis 13,
bei dem der Schritt des Kondensatorentladungsschweißens mit Hilfe eines Generators ausgeführt wird, der eine elektrische Spannung zwischen 100 und 110 V liefert.

15. Verfahren nach Anspruch 13 oder Anspruch 14,
bei dem der Schritt des Kondensatorendadungsschweißens mit Hilfe einer Pistole ausgeführt wird, die mit dem Generator verbunden ist, wobei die Pistole Bolzen (12) mit einer Nachpresskraft von 1,5 bis 2 daN auszuwerfen vermag.

## Claims

1. Cryogenic assembly (1) comprising a structure (2) on which is mounted at least one fixing device (4) for receiving at least one piece of equipment (6), **characterized in that** each fixing device (4) is joined to the said structure (2) by means of a weld (26) formed with the aid of capacitor discharge welding means.

2. Cryogenic assembly (1) according to Claim 1, **characterized in that** each fixing device (4) has a pin (12) of which one end (12a) is joined to the said structure (2) by means of a weld (26) formed with the aid of capacitor discharge welding means, together with means (14) for receiving at least one piece of equipment (6) which are fixed to the other end (12b) of the pin (12) of the said device (4).

3. Cryogenic assembly (1) according to Claim 2, **characterized in that**, for each fixing device (4), the receiving means (14) are mounted on the said pin (12) with the aid of a screw and nut joint.

4. Cryogenic assembly (1) according to Claim 2 or Claim 3, **characterized in that**, for each fixing device (4), the receiving means (14) have a surface (16) for receiving a piece of equipment (6) of substantially linear shape, the said receiving surface (16) having a cross section taking the form of the smaller base and the two lateral sides of a trapezium.

5. Cryogenic assembly (1) according to Claim 4, **characterized in that**, for each fixing device (4), the receiving means (14) are provided with a tightening collar (18) for keeping the piece of equipment (6) of substantially linear shape fixed against the said receiving surface (16).

6. Cryogenic assembly (1) according to any one of the preceding claims, **characterized in that** the structure (2) is a cryogenic tank structure, each fixing device (4) being joined to either an inner surface (8) or an outer surface (10) of the tank structure (2).

7. Cryogenic assembly (1) according to any one of Claims 2 to 6, **characterized in that** the structure (2) has a mean thickness of approximately 6 mm, and in which each weld (26) provided between a pin (12) and the structure (2) has a thickness of approximately 0.4 mm.

8. Cryogenic assembly (1) according to any one of Claims 2 to 7, **characterized in that** the diameter of each pin (12) is approximately 6 mm.

9. Cryogenic assembly (1) according to any one of Claims 2 to 8, **characterized in that** the pin (12) of each fixing device (4) and the structure (2) are made from aluminium or from one of its alloys.

10. Cryogenic assembly (1) according to any one of the preceding claims, **characterized in that** each piece of equipment (6) to be fixed to each fixing device (4) is a piece of equipment (6) of substantially linear shape such as a cable, the said cryogenic assembly (1) being intended to be fitted to a launcher or to a rocket.

11. Method for fabricating a cryogenic assembly (1) according to any one of the preceding claims, **characterized in that** it comprises a step of capacitor discharge welding of each fixing device (4) to the structure (2) of the assembly (1).

12. Method according to Claim 11, **characterized in that** the step of capacitor discharge welding is carried out by a percussion technique with gas shielding.

13. Method according to Claim 11 or Claim 12, **characterized in that** the step of capacitor discharge welding is carried out with the aid of a generator having capacitors with a total capacitance of approximately 96000 µF.

14. Method according to any one of Claims 11 to 13, **characterized in that** the step of capacitor discharge welding is carried out with the aid of a generator delivering a voltage in the range from 100 to 110 V.

15. Method according to Claim 13 or Claim 14, **characterized in that** the step of capacitor discharge welding is carried out with the aid of a gun connected to the said generator, the gun being capable of ejecting pins (12) with a forging force in the range from 1.5 to 2 daN.
